# EUROPÄISCHE PATENTSCHRIFT

(11) **EP 0 742 873 B1**
(45) Veröffentlichungstag und Bekanntmachung des Hinweises auf die Patenterteilung: **21.10.1998**
(21) Anmeldenummer: 95908241.3
(22) Anmeldetag: 01.02.1995
(51) Int. Cl.: F16B 41/00

(54) **MONTAGEEINHEIT AUS EINEM MONTAGETEIL, EINEM FIXIERTEIL UND EINER HÜLSE ALS VERLIERSICHERUNG SOWIE HERSTELLUNGSVERFAHREN DER MONTAGEEINHEIT**
MOUNTING UNIT MADE OF A MOUNTING PART, A FIXING PART AND A SLEEVE AS ANTI-LOOSENING LOCK, AND PROCESS FOR PRODUCING THE MOUNTING UNIT
UNITE DE MONTAGE COMPRENANT UNE PARTIE DE MONTAGE, UNE PARTIE DE FIXATION ET UN MANCHON FAISANT OFFICE DE SECURITE ANTI-DESSERRAGE, ET PROCEDE DE PRODUCTION DE LADITE UNITE DE MONTAGE

(30) Priorität: 01.02.1994 DE 4402982; 03.02.1994 DE 4403193
(43) Veröffentlichungstag der Anmeldung: 20.11.1996
(73) Patentinhaber: RICHARD BERGNER GMBH & CO, 91124 Schwabach (DE)
(72) Erfinder: SCHNEIDER, Wilhelm, D-91126 Rednitzhembach (DE)
(74) Vertreter: Tergau, Enno, Dipl.-Ing.
(86) Internationale Anmeldenummer: EP9500354
(87) Internationale Veröffentlichungsnummer: WO9521335

(56) Entgegenhaltungen:
- EP-A- 0 272 642
- EP-A- 0 618 385
- DE-U- 8 714 488
- US-A- 3 389 736
- US-A- 3 465 803
- US-A- 5 094 579

## Beschreibung

Die Erfindung betrifft eine Montageeinheit mit den Merkmalen des Oberbegriffs des Anspruches 1.

Der Trend der Montagetechnik geht dahin, mit einem möglichst hohen Vorfertigungsgrad zu arbeiten. Während früher beispielsweise Schrauben erst bei der Endmontage eines Montageteils - z.B. eines Gehäusedeckels - eingesetzt wurden, wird heute verlangt, daß dieses Montageteil bereits mit den notwendigen Befestigungsschrauben zu einer Montageeinheit kombiniert zur Endmontage angeliefert wird, die dann mit einem vergleichsweise sehr viel geringeren Zeitaufwand gegebenenfalls auch automatisch durch einen Roboter zu bewerkstelligen ist. Hierbei muß sichergestellt sein, daß die Schrauben verliersicher mit dem Montageteil verbunden sind. Dabei kann sich meistenteils die Werkstoffauswahl für das Montageteil nicht an den Zweckmäßigkeiten für eine verliersichere Vorfixierung der Befestigungsschrauben am Montageteil orientieren.

Des weiteren muß sichergestellt sein, daß die Fixierenden, bei Schrauben also deren Gewinde, zwischen Vormontage und Endmontage unbeschädigt bleiben. Insbesondere betrifft dies den Transport und die Lagerung der mit den Fixierteilen bestückten Montageteile. Darüber hinaus besteht das Problem, daß das Montageteil an seinem Umfang mehrere Schrauben aufweist, wie dies z.B. bei Gehäusedeckeln der Fall ist. Hier muß zur Montage sichergestellt werden, daß bei einem nicht gleichzeitigen Greifen der Schraubengewinde in ihren Gegengewinden das Montageteil nicht schiefgezogen wird. Das würde eine Weitermontage behindern oder unmöglich machen.

Eine derartige Montageeinheit ist bekannt aus US 3 465 803 A. Dort wird die axial wirksame Verliersicherung zwischen Fixierteil und Halteteil durch plastische Verformung des nach Art eines umlaufenden Halskragens radial einwärts gerichteten Haltevorsprunges am Halteteil bewirkt. Dazu ist zwischen Kopf und Schaft des Fixierteils ein radial über den Schaft hinausstehender Ringflansch vorgesehen, der am Ende des Fügevorganges mit seiner an den Schaft angrenzenden Schulter den nach Art eines Halskragens radial einwärts gerichteten Haltevorsprung des Halteteils beaufschlagt und plastisch derart verformt, daß dessen wirksamer Innendurchmesser verkleinert und somit in eine Hintergriffstellung hinter den dort als Schraubgewinde ausgebildeten Fixiervorsprung des Fixierteils gebracht wird. Allerdings stellt dabei der Ringflansch in Fügeendstellung radial gesehen eine Formschlußverbindung zwischen Fixierteil und Halteteil her, der jegliches wünschenswerte Radialspiel zwischen diesen Teilen fehlt.

Die plastische Verformung des Haltevorsprungs zur Herstellung der Verliersicherung erfordert einen erheblichen Fügedruck. Zur Übertragung dieses Fügedruckes ist der Ringflansch unterhalb des Kopfes des Fixierteils verhältnismäßig massiv ausgebildet. Das Halteteil muß eine große Wandstärke aufweisen, um unter dem hohen erforderlichen Fügedruck eine Deformation des Halteteils zu vermeiden. Das fehlende Radialspiel macht bei der Montage einen Ausgleich von Lochungenauigkeiten unmöglich.

Weiterhin sind derartige Montageeinheiten beispielsweise bekannt aus EP 0 272 642 B1. Dort dient das hülsenförmige Halteteil nicht nur als Verliersicherung, sondern auch als Träger für ein gummiartiges, zwischen Montageteil und Halteteil einliegendes Zwischenlegteil, welches zur Dämmung des Körperschalls bestimmt ist. Die gummiartige Konsistenz dieses Zwischenlegteils und die dünnwandige Ausbildung des Halteteils bewirken dort deren radiale, elastische Aufweitbarkeit, die die einfache Herstellung einer Verliersicherung ermöglichen. Dazu trägt die Hülse am oberen Ende ihres Durchgangsloches einen dessen lichte Weite geringfügig einschnürenden Halskragen als Axialsperre bzw. als Teil der Verliersicherung. Bei Axialeinschub des Fixierteils wird dieser Halskragen durch zwei über den Schaftquerschnitt hinausstehende Radialvorsprünge des Fixierteils in radialer Richtung elastisch aufgeweitet. Nach dem Passieren der Radialvorsprünge federt der Halskragen radial einwärts in den Hinterschneidungsbereich des Schaftes des Fixierteiles. Dadurch ist die Fixiersicherung vollständig hergestellt. Die genannten Prämissen für die radiale Auffederbarkeit des Halskragens der Hülse begrenzen jedoch die Einsatzmöglichkeiten dieser Lösung.

Der Erfindung liegt die Aufgabe zugrunde, derartige Montageeinheiten in einfacher Weise mit zuverlässigen Verliersicherungen für die Fixierteile zu versehen. Diese Aufgabe wird durch Anspruch 1 gelöst.

Wie bei der gattungsbildenden Montageeinheit ist durch das gesonderte hülsenförmige Halteteil der Konstrukteur frei von den Zwängen einer Werkstoffvorgabe seitens des Montageteils. Die wirksamen Innendurchmesser des Halteteils und Außendurchmesser des Fixierteils sind zunächst so gewählt, daß das Fixierteil beim Fügevorgang ohne irgendwelche Deformationen und damit eventuelle Beschädigungen in das Halteteil eingeführt werden kann. Dann werden unter Axialdruck die zunächst in Axialrichtung überstehenden Haltevorsprünge des Halteteils radial in Richtung der Fixierachse plastisch soweit verformt, daß eine Axialsperre vorliegt und somit das Fixierteil unverlierbar mit dem Halteteil verbunden ist. Die Durchmesser werden so gewählt, daß zwischen dem Innendurchmesser im Bereich der Haltevorsprünge und dem Schaftdurchmesser des Fixierteils sowie auch zwischen dem Innendurchmesser des Halteteils und dem Fixiervorsprung des Fixierteils das erforderliche Radialspiel zum Ausgleich von Lochungenauigkeiten sichergestellt ist. Diese Herstellungsart der Verliersicherung begünstigt großzügige Fertigungstoleranzen und bedeutet eine Minimierung der Verformungskräfte beim Fügen von Fixierteil und Halteteil bzw. beim Herstellen der Verliersicherung zwischen beiden Teilen. Dies macht es gegebenenfalls möglich, bei Ausführung des Fixierteils als Schraube deren Gewinde als Fixiervorsprung im Sinne der Erfindung zu nutzen. Außerdem kann das Halteteil bei vollständiger Einbettung in das Montageteil auch als dünnwandige Hülse ausgebildet sein.

Die Bildung des Fixiervorsprunges als Teil der Axialsperre nach Anspruch 2 hat den Vorteil, daß die zur Erzeugung des Ringflansches in Form einer Ringrille eingewalzte Umfangseinschnürung gleichzeitig als Gewindeauslauf des Schraubgewindes dient und ein Überschrauben durch das Muttergewinde erlaubt. Dadurch ist keine teure Aussenkung des Muttergewindes erforderlich und der Radialvorsprung ist in sehr günstiger Nähe zum Schraubgewinde, d.h. zum in Lager- und Vormontagestellung zu schützenden Fixierglied angeordnet. Die dazu erforderliche wirksame Hülsenlänge des Halteteils kann entsprechend minimiert werden.

Die Ansprüche 3 und 4 beschreiben einfache Möglichkeiten zur Herstellung des Fixiervorsprunges des Fixierteils in einer Weise, die an der Hülse über den Umfang gleichmäßig verteilt angreifende Haltekräfte sicherstellt. Anspruch 5 begünstigt das Einführen des Fixierteils in das Halteteil.

Die Maßnahme nach Anspruch 6 findet dann Anwendung, wenn die axiale Wirklänge des Fixierendes des Fixierteils größer ist als die Wandstärke des vom Fixierteil durchsetzten Montageteils. Hier weist zweckmäßig insbesondere der außerhalb des Montageteils befindliche Bereich der Hülse eine vergrößerte Wandstärke auf, um den bei der Endmontage vom Kopf des Fixierteils ausgeübten Fixierdruck besser auf das Montageteil übertragen zu können.

Die für die Einwärtsformung der Haltevorsprünge notwendigen Kräfte lassen sich durch eine geeignete Werkstoffauswahl für die Hülse vergleichsweise gering halten. Dies läßt sich vor allem gemäß Anspruch 8 durch eine geeignete Formgebung der Haltevorsprünge realisieren. Dafür enthalten die Ansprüche 9-11 Vorschläge.

Die Ansprüche 11 und 12 stellen sicher, daß Stanzgrate bzw. die Außenkanten der Haltevorsprünge nach deren Einbiegen in ihre Haltepositon als Verliersicherung nicht in Richtung auf den Kopf des Fixierteils vorstehen und dessen Anziehen behindern.

Die Maßnahme nach Anspruch 12 läßt sich einfach durch die Stanzrichtung beim Stanzen bestimmen.

Montageteile mit entsprechend groß dimensionierter Wandstärke reichen aus, um zwischen ihren Außenseiten vollständig den mit dem Halteteil der Hülse zusammenwirkenden Fixiervorsprung bzw. das Gewinde des Fixierteiles aufzunehmen. In diesem Fall braucht die Hülse nicht über die Begrenzungswände des Montageteils hinauszustehen. In einem solchen Fall reicht eine vollständig innerhalb des Durchgangsloches aufgenommene Hülse zur Bereitstellung der Haltevorsprünge aus und dann läßt sich die Hülse besonders kostensparend nach Anspruch 15 herstellen. Anspruch 16 dient der Stabilisierung der endgültigen Hülsenform, was durch eine Maßnahme nach Anspruch 17 noch unterstützt wird.

Anspruch 18 beschreibt eine besonders einfache Herstellung der nach Art eines Halskragens wirksamen Haltevorsprünge bei aus einem Blechzuschnitt mit Ringflansch bestehenden Hülsen für das plastische Fügeverfahren.

Eine Ausbildung der Hülse nach Anspruch 19 ist insbesondere dann von Vorteil, wenn als Montageteil ein Kunststoffspritzteil verwendet wird. Dann sorgen die warzenartigen Formvorsprünge für eine sichere Verklammerung zwischen Hülse und Montageteil.

Anspruch 20 stellt eine dichte Auflagefläche des Kopfes des Fixierteils auf der Oberfläche des Montageteils auch dann sicher, wenn nach einer plastischen Verformung der Haltevorsprünge zu deren Überführung in die einwärts gerichtete Verliersicherungsstellung immer noch ein axialer Überstand der Haltevorsprünge über die Oberfläche des Montageteils vorliegen sollte.

Anspruch 21 beschreibt noch einmal mit kurzen Worten ein Fügeverfahren zur Herstellung der erfindungsgemäßen Verliersicherungen .

Die Erfindung wird anhand von in den Figuren dargestellten Ausführungsbeispielen näher erläutert. Darin zeigen:

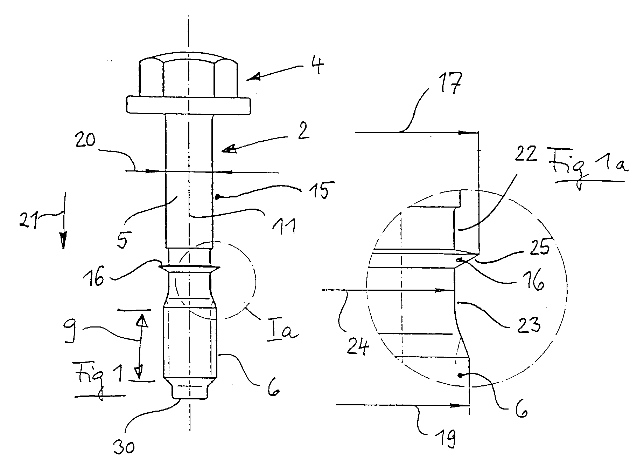

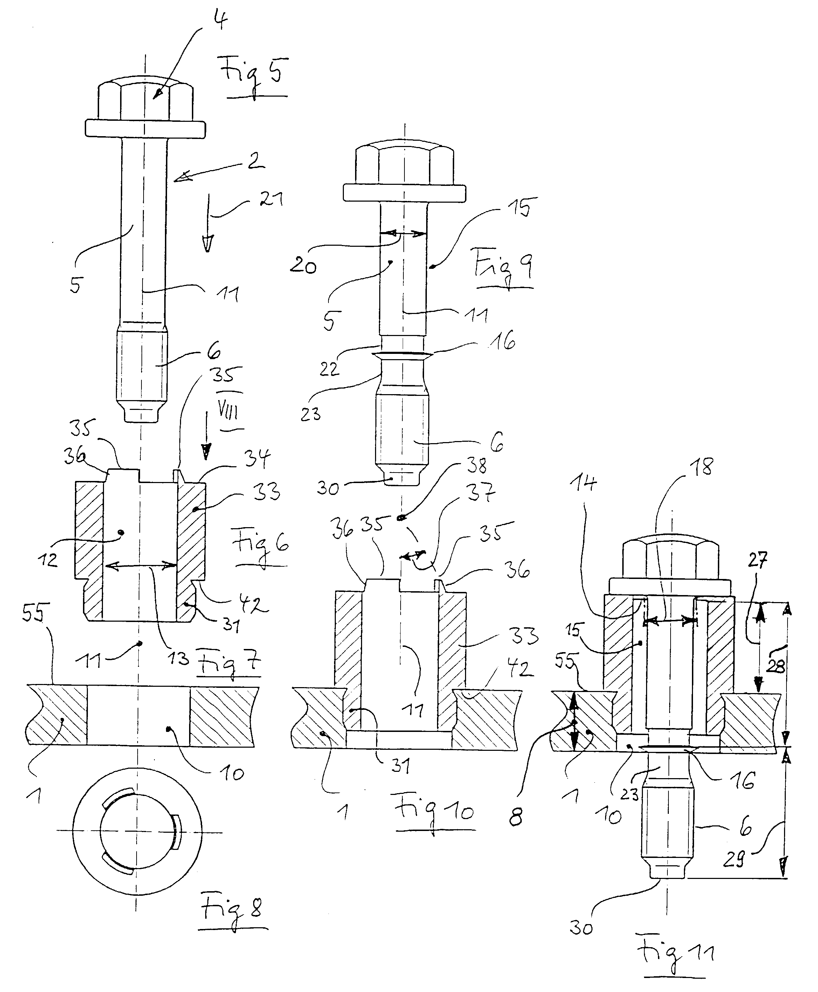

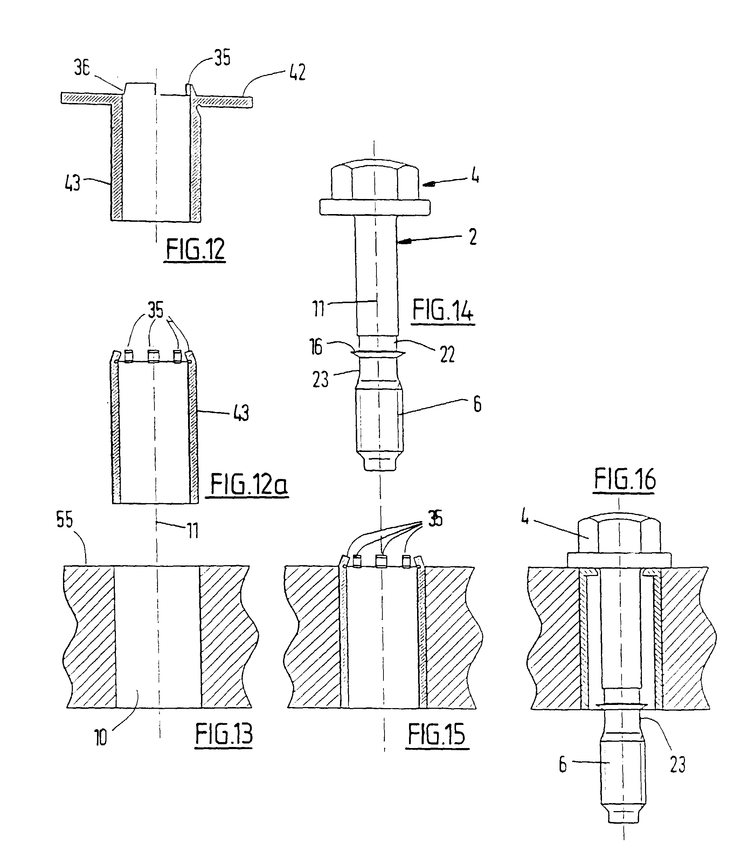

- Fig. 1: die Seitenansicht einer das Fixierteil der Montageeinheit bildenden Schraube,
- Fig. 1a: eine vergrößerte Darstellung la aus Fig. 1,
- Fig. 5: eine alternative Ausführungsform einer als Fixierteil einsetzbaren Schraube,
- Fig. 6: die vertikale Schnittdarstellung eines hülsenförmigen Halteteils in seiner vorgeformten Ausgestaltung,
- Fig. 7: eine Schnittdarstellung des Montageteils im Fixierbereich des zugehörigen Halteteils,
- Fig. 8: eine Draufsicht in Pfeilrichtung VIII auf das Halteteil gemäß Fig. 6,
- Fig. 9: das Fixierteil in seiner Ausführungsform gemäß Fig. 1 in Fügeausgangsstellung gegenüber Fig. 10,
- Fig. 10: eine Schnittdarstellung des vorgeformten und mit dem Montageteil verbundenen Halteteils in Fügeausgangsstellung gegenüber dem Fixierteil nach Fig. 9,
- Fig. 11: das Fixierteil gemäß Fig. 9 mit dem aus seiner Vorformstellung (Fig. 10) in seine Verliersicherungsstellung umgeformten Halteteil samt Montageteil
- Fig. 12 und 12a: Schnittdarstellungen von hülsenförmigen Halteteilen in ihrer Vorformstellung, wie sie zur vollständigen Einbettung in ein Montageteil bestimmt sind,
- Fig. 13: den Querschnitt durch eine Aufnahmebohrung im Montageteil zur Aufnahme von Halteteilen nach Fig. 12 und Fig. 12a,
- Fig. 14: ein als Schraube analog Fig. 1 und Fig. 9 ausgebildetes Fixierteil in Fügeausgangsstellung gegenüber der ebenfalls in Fügeausgangsstellung befindlichen Einheit von Montageteil und Halteteil nach Fig. 15,
- Fig. 15: die Einheit von Montageteil und vorgeformten Halteteil in Fügeausgangsstellung gegenüber dem Fixierteil nach Fig. 14,
- Fig. 16: die Montageeinheit mit den Einzelelementen gemäß Fig. 12 - Fig. 15 in verliergesicherter Fügeendstellung,
- Fig. 17: ein hülsenförmiges Halteteil in Vorformstellung,
- Fig. 18: den Blechzuschnitt zur Bildung der Hülse gemäß Fig. 17 in abgewickelter Form,
- Fig. 19 und Fig. 20: den Fig. 17 und 18 analoge Darstellungen einer jeweils modifizierten Ausführungsform,
- Fig. 21: eine vergrößerte Ausschnittdarstellung des Bereiches von Pfeil XXI in Fig. 19,
- Fig. 22: eine vergrößerte Ausschnittdarstellung des Hülsenteiles von Fig. 21 mit in Verliersicherungsstellung einwärts gebogenen Haltevorsprüngen,
- Fig. 23: einen Querschnitt durch ein Montageteil aus Kunststoff, in welches ein noch in seiner Vorformstellung befindliches Halteteil eingebettet ist,
- Fig. 24: die schematische Querschnittsdarstellung der Fügeausgangsstellung einer Montageeinheit aus einem Fixierteil gemäß Fig. 1, 9 und 14 so wie einem Montageteil mit noch in seiner Vorformstellung befindlichem Halteteil nach Fig. 23,
- Fig. 25: eine Schnittdarstellung des Ensembles analog Fig. 24 in Fügeendstellung,
- Fig. 26: die vergrößerte Darstellung des Kopfes eines Fixierteils teilweise im Schnitt,
- Fig. 27: eine Querschnittsdarstellung analog Fig. 26 mit in Fügeendstellung befindlichem, gemäß Fig. 26 ausgebildetem Kopf,
- Fig. 28: die perspektivische Draufsicht auf ein hülsenförmiges Halteteil mit Flanschring in seiner Vorformstellung,
- Fig. 29: die Schnittdarstellung einer unter Verwendung eines Halteteils nach Fig. 28 hergestellen Montageeinheit mit Kunststoffhülse im verliergesicherten Montageendzustand.

Die Montageeinheit besteht aus im wesentlichen drei Teilen, dem allgemeiner als Montageteil bezeichneten Gehäusedeckel 1, der in der bisherigen Beschreibung allgemeiner als Fixierteil bezeichneten Schraube 2 und der in der Beschreibungseinleitung allgemeiner als hülsenförmiges Halteteil bezeichneten Hülse 33,43.

Die Schraube 2 enthält den zu ihrer Fixierbetätigung dienenden Kopf 4. An den Kopf 4 schließt sich der Schraubenschaft 5 an und an dessen unterem Ende befindet sich das Schraubgewinde 6, welches in der Beschreibungseinleitung auch allgemeiner als Fixierglied oder Fixierteil bezeichnet ist.

Die Schraube 2 dient zur Fixierung eines Montageteils, nämlich des Deckels 1, an einem Maschinenteil 7, z.B. an einem Maschinengehäuse. Vielfach ist der Deckel 1 vergleichsweise dünnwandig. Seine Wandstärke 8 ist vielfach deutlich kleiner als die Gewindelänge 9, so daß bei unmittelbar am Deckel 1 verliersicher gehaltener Schraube 2 das Schraubgewinde 6 ungeschützt außerhalb der Umfassung durch die Wandstärke 8 des Deckels 1 liegen würde.

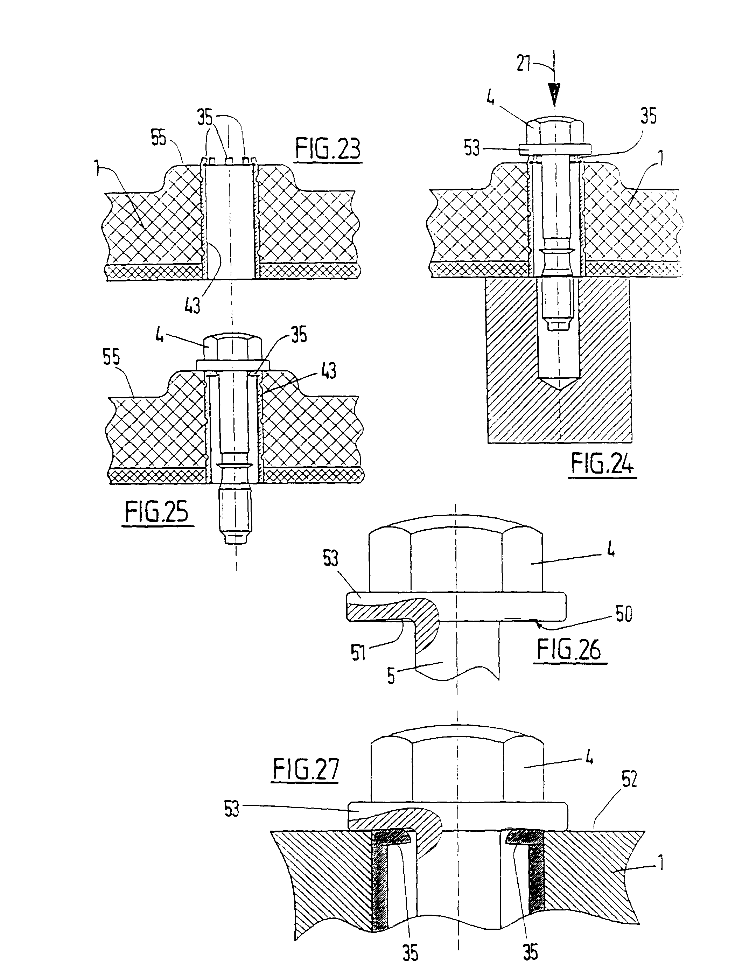

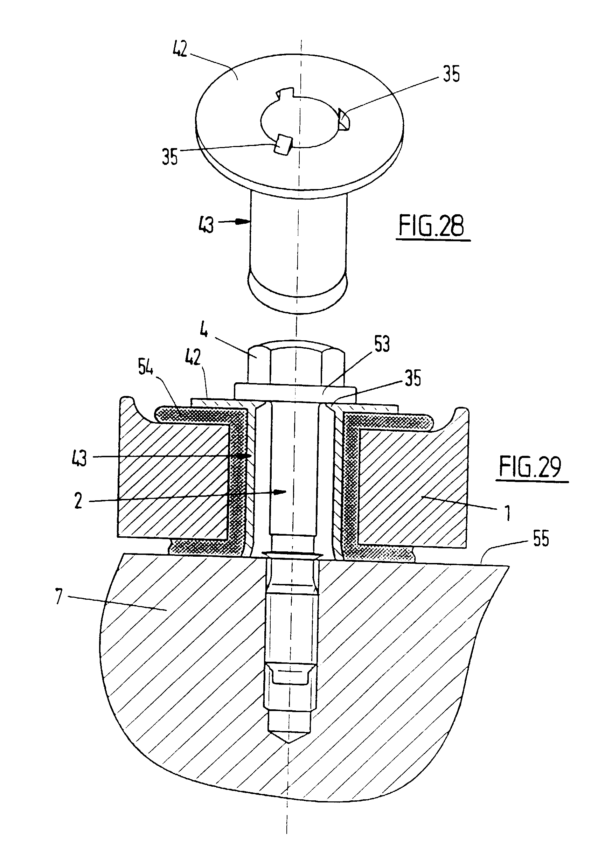

Um eine solche ungeschützte Freilage zu vermeiden, ist die in Richtung der Schraubachse 11 gemessene Wirklänge des Durchgangsloches 10 durch die Hülse 33 verlängert. Die Hülse 33 ist mit dem Deckel 1 fest verbunden, und zwar auf der in Montagestellung dem Schraubenkopf 4 zugewandten Seite. Die Hülse trägt eine Durchgangsbohrung 12 mit der lichten Weite 13. Die Weite bzw. der Innendurchmesser 13 sind so bemessen, daß die Hülse 33 den Schraubenschaft 5 mit radialem Spiel umgibt. An seinem oberen kopfseitigen Ende trägt die Hülse 33 radial einwärts gerichtete Haltevorsprünge 35 in Form eines Halskragens 14. Mit diesem sich in Segmenten ringförmig über den Umfang des Mantels der Durchgangsbohrung 12 erstreckenden Halskragen 14 ragt die Hülse 33 in ihrer verliersichernden Fügeendstellung in den Hinterschneidungsbereich 15 am Umfang des Schraubenschaftes 5 hinein, der zwischen dem Schraubenkopf 4 und dem Schraubengewinde 6 oder einem vor dem Schraubengewinde 6 liegenden Ringflansch 16 befindlich ist. Dieser nachstehend insbesondere hinsichtlich seiner Herstellungsweise noch näher beschriebene Ringflansch 16 bildet in Fügeendstellung gemeinsam mit dem Halskragen 14 der Hülse 33 die Axialsperre der Verliersicherung. Dazu ist der Außendurchmesser 17 des Ringflansches 16 nach dem Fügen größer als der Innendurchmesser 18 des Halskragens 14. Der Innendurchmesser 18 kann für ein erwünschtes Radialspiel größer sein als der Schaftdurchmesser 20 (Fig. 27,29).

Der Außendurchmesser 19 des Schraubgewindes 6 ist kleiner als der Außendurchmesser 17 des Ringflansches 16, aber größer als der Schaftdurchmesser 20 der Schraube 2.

Der Ringflansch 16 des Fixierteils ist durch das Einwalzen von - beim Ausführungsbeispiel zwei - Ringrillen 22,23 in den Schraubenschaft 5 gebildet. Die Ringrillen 22,23 sind den Ringflansch 16 flankierende Einschnürungen des Schaftes 5. Ihr Durchmesser 24 ist kleiner als der Schaftdurchmesser 20. Durch das Einwalzen der beiden Ringrillen 22,23 wird der verdrängte Schaftwerkstoff zu dem Ringflansch 16 mit vergleichsweise großem, als Axialsperre wirksamem Außendurchmesser 17 ausgeformt. Die dem Schraubgewinde 6 zugewandte Ringrille 23 ist zusätzlich als Gewindeauslauf wirksam und läßt ein Überschrauben des Muttergewindes zu.

Es ist - wenngleich nicht mit sämtlichen geschilderten Vorteilen - statt des Ringflansches 16 auch ein Rändelwulst mit gleichmäßig über den Schaftumfang verteilten Rändelvorsprüngen denkbar.

Der Fügevorgang zwischen Schraube 2 und Hülse 33 wird durch in Preßrichtung 21 wirksame Einführungsschrägen 25 am Ringflansch 16 bzw. durch Schrägflächen 36 an den den Halskragen 14 bildenden Haltevorsprüngen 35 erleichtert bzw. begünstigt.

Das Halteteil, nämlich die Hülse 33 steht, als Aufsetzhülse mit dem Teil 27 ihrer Axialerstreckung über die Betätigungsseite 55 des Deckels 1 hinaus. Des weiteren sind aus Fig. 11 die folgenden Abmessungsrelationen ersichtlich: Der maximale Abstand 28 zwischen den beiden axialen Sperrteilen 14,16 der Montageeinheit ist zweckmäßig größer als der Axialabstand 29 zwischen Ringflansch 16 und Schaftende 30, damit in Lagerstellung das empfindliche Schraubgewinde 6 vollständig in eine Hüllstellung am Montageteil, d.h. in die Hülse 33 eintauchen kann. Durch die Ringrille 23 wird auch die mögliche Einschraubtiefe der Schraube 2 vergrößert.

Die Fixierung der Hülse 33 am Deckel 1 erfolgt durch Einpressen des Hülsenendes 31 in das Durchgangsloch 10 des Deckels 1. Es sind aber auch eine Löt- oder eine Schweißverbindung denkbar.

Die Axialsperre des Halteteils 33 wird erst beim Axialeinschub der hinsichtlich ihrer Form im wesentlichen unveränderten Schraube 2 durch plastische Verformung gebildet. Denkbar ist auch eine Schraubenform nach Fig. 5 ohne einen Ringflansch 16. Dann übernimmt nämlich das Schraubengewinde 6 die Funktion eines die Verliersicherung herstellenden Fixiervorsprunges, obwohl dann die Funktionssicherheit nicht ganz so gut gewährleistet ist.

Das dem Schraubenkopf 4 zugewandte Stirnende 34 der Hülse 33 enthält mehrere über den Umfang verteilte Haltevorsprünge 35. Die Haltevorsprünge 35 sind in Verliersicherungsstellung zum Hineinstehen in den Hinterschneidungsbereich 15 der Schraube 2 einwärts gebogene, jedoch in Ausgangsstellung in Axialrichtung verlaufende und zwischen sich einen ungehinderten Durchgang des Fixiervorsprunges 6,16 ermöglichende Randvorsprünge. Mit einem die Verliersicherung in Preßrichtung 21 herstellenden Axialschub werden die Haltevorsprünge 35 durch den Schraubenkopf 4 in Richtung auf die Schraubenachse 11 bzw. in den Hinterschneidungsbereich 15 hinein verformt. Die radial außenliegenden Flanken 36 der Randvorsprünge 35 sind in Ausgangsstellung vor ihrer Verformung abgeschrägt. Die Abschrägungen bilden einen sich in Richtung von der Hülse 33 weg schließenden spitzen Winkel 37 mit der Hülsenachse bzw. Schraubachse 11. Dadurch liegen die Schrägflächen etwa auf dem Mantel einer virtuellen, mit der Hülse 33 koaxialen, geraden Pyramide oder eines entsprechenden Kegels, dessen Spitze bzw. Winkelscheitel 38 dem Schraubenkopf 4 zugewandt ist.

Zur Bildung von Abschrägungen 36 können die Haltevorsprünge 35 auch geringfügig radial einwärts vorgebogen sein. Jedenfalls wird durch die Abschrägungen 36 der Außenflanken der Haltevorsprünge 35 sichergestellt, daß diese z.B. durch den Schraubenkopf 4 beim Einpressen der Schraube 2 radial nach innen in den Hinterschneidungsbereich 15 der Schraube 2 einwärts gebogen werden.

Um diese Einwärtsbiegungen zu erleichtern, können die axialen Haltevorsprünge 35 an ihrem radial innenliegenden Fußbereich mit als Sollbiegekerben 39 wirksamen Querschnittschwächungen versehen sein.

Die Außenkanten 40,41 der Haltevorsprünge 35 sind zweckmäßig abgerundet. Diese Abrundungen können einfach dadurch hergestellt sein, daß sie aus dem Hülsenwerkstoff ausgestanzt werden, wobei die Stanzrichtung so gewählt ist, daß sich die Abrundungen selbsttätig einstellen. Durch die Abrundungen wird beim Einschrauben der Schrauben 2 der Friktionswiderstand reduziert.

Das Halteteil 33 liegt mit einem Ringflansch 42 auf der Betätigungsseite des Montageteils bzw. Deckels 1 auf.

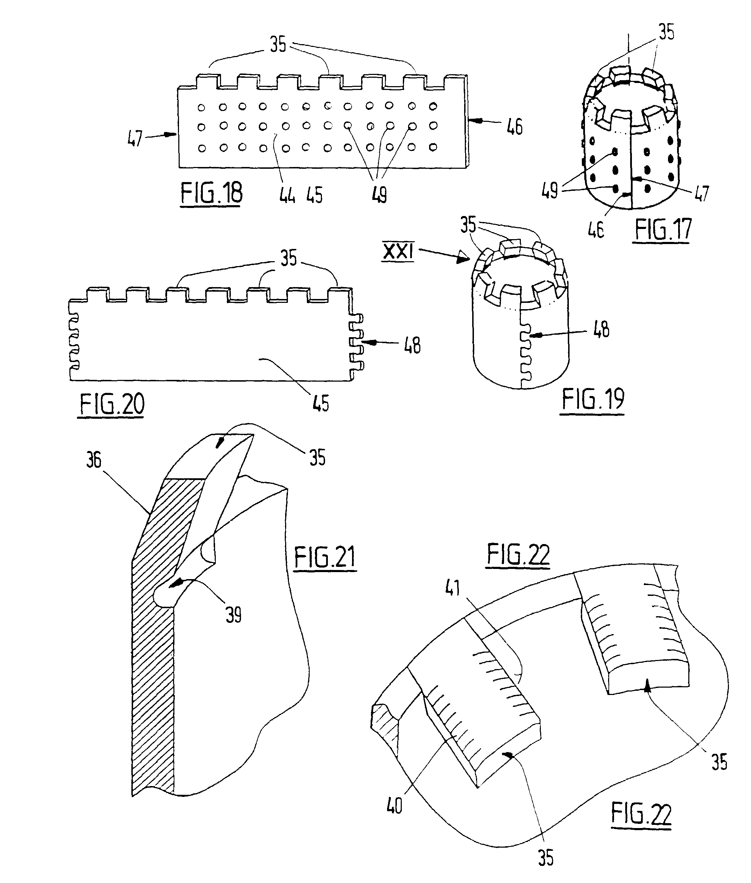

Bei entsprechender Wandstärke des Deckels bzw. Montageteils 1 ist vorgesehen, daß das Halteteil bzw. die Hülse 43 vollständig vom Deckel 1 bzw. vom Deckelwerkstoff umschlossen ist (Fig. 23-25). Dann liegen die Haltevorsprünge 35 in einwärts gebogener Verliersicherungsstellung (Fig. 25) in etwa der Ebene des betätigungsseitigen Einganges des Durchgangsloches 10 des Montageteils bzw. Deckels 1. In einem solchen Fall ist die Einsatzhülse 43 zweckmäßig durch einen den Lochumfang auskleidenden Blechzuschnitt 44 bzw. 45 gebildet. Der Blechzuschnitt ist im Montagezustand um 360° um die Lochachse 11 herumgelegt. Dabei stoßen seine in Lochachsenrichtung verlaufenden Kanten 46,47 aneinander. Die Stoßkanten können auch miteinander verzahnt sein, wie dies an der Verzahnung 48 des Blechzuschnittes 45 (Fig. 20) erkennbar ist.

Wenn die Hülse 43 zur Einbettung in einen aus Kunststoff gespritzten Deckel 1 bestimmt ist, so trägt sie auf ihrem Umfangsmantel zweckmäßig warzenartige Formschlußvorsprünge 49.

Der Schraubenkopf 4 ist zweckmäßig auf seiner Auflagenseite 50 im Umfangsbereich des Schaftes 5 ausgemuldet (Mulde 51). Dadurch wird ein Anziehen der Schraube durch möglicherweise aus der Oberfläche 52 hinausstehender Restteile der Haltevorsprünge 35 oder durch Verformungsgrate o.dgl. nicht behindert. Der Schraubenkopf 4 liegt trotzdem mit dem Außenumfang seines Auflageflansches 53 auf der Oberfläche 52 des Deckels 1 satt auf (Fig. 26,27).

Das Verfahren zur Herstellung einer verliersicheren Einheit aus Montageteil 1, Fixierteil 2 und Halteteil 33 wird z.B. durch einfaches Einpressen der Schraube 2 in Preßrichtung 21 in die gegebenenfalls bereits mit dem Deckel 1 fest verbundene Hülse 33 bewerkstelligt, was in Preßrichtung 21 erfolgt. Dabei erfolgt eine plastische Verformung der Haltevorsprünge 35 zu etwa einem Ringkragen.

Bei der Ausführungsform gemäß Fig. 29 ist zwischen Hülse 43 und Lochwandung im Deckel 1 eine Kunststoffhülse 54 aus gummielastischem Werkstoff zwischengelegt, wie sie z.B. zu Schalldämmzwecken bekannt ist.

## Patentansprüche

1. Montageeinheit enthaltend
- ein **Montageteil**, z.B. einen Gehäusedeckel (1)
- ein **Fixierteil**, z.B. eine Schraube (2), mit
-- einem seiner Fixierbetätigung dienenden Kopf (4) auf der Betätigungsseite des Montageteils (1),
-- einem an den Kopf (4) anschließenden, mit radialem Spiel in einem Durchgangsloch des Montageteils einliegenden Schaft (5) und
-- einem am Schaftende angeordneten, über den Schaftquerschnitt hinausstehenden und im wesentlichen über den gesamten Schaftumfang des Fixierteils (2) wirksamen Fixiervorsprung (6,16), z.B. ein Schraubgewinde, sowie
- ein zwischen Montageteil und Fixierteil (2) als Verliersicherung wirksames, hülsenförmigs **Halteteil** (33,43), das
-- am Montageteil (1) fixiert ist,
-- den Schaft (5) und in dessen Einlagestellung den Fixiervorsprung (6,16) des Fixierteils mit radialem Spiel umgibt und
-- mit einem an seinem kopfseitigen Ende (34,42) angeordneten, radial einwärts gerichteten Haltekragen (14,35) als Axialsperre in einen zwischen Kopf (4) und Fixiervorsprung (6,16) des Fixierteils wirksamen Hinterschneidungsbereich (15) hineinreicht,
dadurch gekennzeichnet,
daß der Halskragen (14,35) durch mehrere vorgeformte, über den Umfang des kopfseitigen Endes (34,42) des Halteteils (33,43) verteilte und in ihrer vorgeformten Ausgangsstellung zu einem ungehinderten Durchgang des Fixiervorsprunges (6,16) voneinander beabstandete Haltevorsprünge (35) gebildet ist und daß ein Axialeinschub des Fixierteiles (2) in seine Verliersicherungsstellung im wesentlichen unter in Axialrichtung einwirkender Verformung der Haltevorsprünge (35) erfolgt, die in Verliersicherungsstellung zum Hineinstehen in den Hinterschneidungsbereich radial einwärts gebogen sind.

2. Montageeinheit nach Anspruch 1,
dadurch gekennzeichnet,
daß der Fixiervorsprung des Fixierteils (2) ein zusätzlich zu einem Fixierglied (6) auf dessen Schaft aufgewalzter Ringflansch (16) ist.

3. Montageeinheit nach Anspruch 2.
dadurch gekennzeichnet,
- daß angrenzend an das endseitige Schraubgewinde eine als Gewindeauslauf wirksame Ringrille (23) in den Schaft (5) eingewalzt ist und
- daß der durch die Ringrille (22,23) verdrängte Schaftwerkstoff einen die Ringrille (22,23) flankierenden Ringflansch (16) bildet.

4. Montageeinheit nach einem der Ansprüche 1-3,
dadurch gekennzeichnet,
daß der Fixiervorsprung (6) des Fixierteils (2) ein zusätzlich zu einem Fixierglied, z.B. zusätzlich zu einem Schraubgewinde auf dessen Schaft aufgewalzter Rändelwulst mit gleichmäßig über den Schaftumfang verteilten Rändelvorsprüngen ist.

5. Montageeinheit nach einem der vorhergehenden Ansprüche,
gekennzeichnet durch
in Einführungsrichtung (21) wirksame Einführungsschrägen (25) am Fixiervorsprung (6,16).

6. Montageeinheit nach einem der vorhergehenden Ansprüche,
dadurch gekennzeichnet,
daß das Halteteil (33) als Aufsetzhülse mit einem Teil ihrer Axialerstreckung über die Betätigungsseite des Montageteils (1) hinaussteht.

7. Montageeinheit nach einem der vorhergehenden Ansprüche,
dadurch gekennzeichnet,
daß das Halteteil (33) mit einem Ende in das Durchgangsloch (10) des Montageteils (1) eingepreßt ist.

8. Montageeinheit nach einem der vorhergehenden Ansprüche,
dadurch gekennzeichnet,
daß die Haltevorsprünge (35) durch den Kopf (4) des Fixierteils (2) in Richtung auf die Fixierteilachse (11) verformt sind.

9. Montageeinheit nach einem der vorhergehenden Ansprüche,
dadurch gekennzeichnet,
daß die radial außenliegenden Flanken der Randvorsprünge (35) in Ausgangsstellung vor ihrer Verformung abgeschrägt sind derart, daß die Schrägflächen (36) etwa auf dem Mantel einer virtuellen, mit der Hülse (33) koaxialen, geraden Pyramide oder eines entsprechenden Kegels liegen, deren Spitzen (38) dem Kopf (4) des Fixierteils zugewandt sind.

10. Montageeinheit nach einem der vorhergehenden Ansprüche,
dadurch gekennzeichnet,
daß die Randvorsprünge (35) geringfügig radial einwärts vorgebogen sind.

11. Montageeinheit nach einem der vorhergehenden Ansprüche,
dadurch gekennzeichnet,
daß die Randvorsprünge (35) an ihrem radial innenliegenden Fußbereich mit als Sollbiegekerben (39) wirksamen Querschnittsschwächungen versehen sind.

12. Montageeinheit nach einem der vorhergehenden Ansprüche,
dadurch gekennzeichnet,
daß die Außenkanten (40,41) der Haltevorsprünge (35) abgerundet sind.

13. Montageeinheit nach einem der vorhergehenden Ansprüche,
dadurch gekennzeichnet,
daß das Halteteil (33) mit einem Ringflansch (42) auf der Betätigungsseite des Montageteils (1) aufliegt.

14. Montageeinheit nach einem der vorhergehenden Ansprüche,
dadurch gekennzeichnet,
daß das Halteteil (43) als Einsatzhülse vollständig vom Durchgangsloch (10) umschlossen ist und daß seine Randvorsprünge (35) in einwärts gebogener Verliersicherungsstellung in etwa der Ebene des betätigungsseitigen Einganges des Durchgangsloches (10) liegen.

15. Montageeinheit nach Anspruch 14,
dadurch gekennzeichnet,
daß die Einsatzhülse (43) durch einen den Lochumfang auskleidenden Blechzuschnitt (44,45) gebildet ist.

16. Montageeinheit nach Anspruch 15,
dadurch gekennzeichnet,
daß der Blechzuschnitt (44,45) um 360° um die Lochachse (11) herumgelegt ist und daß seine in Lochachsenrichtung verlaufenden Kanten (46,47) aneinanderstoßen.

17. Montageeinheit nach Anspruch 15 oder 16,
dadurch gekennzeichnet,
daß die Stoßkanten (46,47) miteinander verzahnt sind.

18. Montageeinheit nach einem der vorhergehenden Ansprüche,
dadurch gekennzeichnet,
daß die Randvorsprünge (35) im wesentlichen in Axialrichtung zum Kopf (4) des Fixierteiles (2) vorstehend eingeprägte, beim Axialeinschub (21) in ihre radiale Hintergriffstellung plastisch verformbare Noppen sind.

19. Montageeinheit nach einem der vorhergehenden Ansprüche,
dadurch gekennzeichnet,
daß die Hülse (43) auf ihrem Umfangsmantel warzenartige Formschlußvorsprünge (49) trägt.

20. Montageeinheit nach einem der vorhergehenden Ansprüche,
dadurch gekennzeichnet,
daß der Kopf (4) des Fixierteils (2) auf seiner Auflageseite (50) im Umfangsbereich des Schaftes konkav ausgemuldet ist.

21. Verfahren zur Herstellung einer verliersicheren Montageeinheit nach einem der vorhergehenden Ansprüche,
dadurch gekennzeichnet,
daß das Fixierteil (2) mit seinem Fixierende (30) von der Beaufschlagungsseite her in das Halteteil (33,43) eingeführt und bei radial einwärts gerichteter Verformung der Haltevorsprünge (35) in deren Verliersicherungsstellung unter Druckbeaufschlagung in Axialrichtung (21) eingepreßt wird.

## Claims

1. Mounting unit comprising
- a mounting part, for example a housing cover (1)
- a fixing part, for example a screw (2), having
-- a head (4), serving to actuate the fixing of the screw, on the actuating side of the mounting part (1),
-- a shank (5) which adjoins the head (4) and lies with radial play in a through-hole in the mounting part and
-- a fixing projection (6, 16), for example a screw thread, which is arranged at the end of the shank, protrudes beyond the shank cross-section and is essentially effective over the entire shank circumference of the fixing part (2), and also
- a sleeve-shaped retaining part (33, 43) which is effective between the mounting part and fixing part (2) as a captive fastening,
-- is fixed on the mounting part (1),
-- surrounds, with radial play, the shank (5) and, in its insertion position, the fixing projection (6, 16) of the fixing part, and
-- reaches, by means of a retaining collar (14, 35), which is arranged on its head-side end (34, 42) and is directed radially inwards, into an undercut region (15), which is effective between the head (4) and fixing projection (6, 16) of the fixing part, as an axial catch,
characterized in that the neck collar (14, 35) is formed by a plurality of preformed retaining projections (35) which are distributed over the circumference of the head-side end (34, 42) of the retaining part (33, 43) and in their preformed starting position are spaced *apart* from one another to give an unhindered passage for the fixing projection (6, 16), and in that an axial insertion of the fixing part (2) into its captive-fastening position essentially takes place under deformation, acting in the axial direction, of the retaining projections (35) which are bent radially inwards in the captive-fastening position so as to enter into the undercut region.

2. Mounting unit according to Claim 1, characterized in that the fixing projection of the fixing part (2) is an annular flange (16) which, in addition to a fixing member (6), is rolled onto the shank of the fixing part.

3. Mounting unit according to Claim 2, characterized
- in that adjacent to the end-side screw thread, an annular groove (23), which is effective as the thread run-out, is rolled into the shank (5), and
- in that the shank material displaced by the annular groove (22, 23) forms an annular flange (16) flanking the annular groove (22, 23).

4. Mounting unit according to one of Claims 1-3, characterized in that the fixing projection (6) of the fixing part (2) is a knurled bead which, in addition to a fixing member, for example in addition to a screw thread, is rolled onto the shank of the fixing part and has knurled projections distributed uniformly over the shank circumference.

5. Mounting unit according to one of the preceding claims, characterized by leading-in slopes (25), which are effective in the leading-in direction (21), on the fixing projection (6, 16).

6. Mounting unit according to one of the preceding claims, characterized in that the retaining part (33) protrudes, by part of its axial extent, over the actuating side of the mounting part (1) as an attachment sleeve.

7. Mounting unit according to one of the preceding claims, characterized in that the retaining part (33) is pressed by one end into the through-hole (10) in the mounting part (1).

8. Mounting unit according to one of the preceding claims, characterized in that the retaining projections (35) are deformed in the direction of the fixing-part axis (11) by the head (4) of the fixing part (2).

9. Mounting unit according to one of the preceding claims, characterized in that the radially outer flanks of the edge projections (35) are bevelled in the starting position before they are deformed, in such a manner that the sloping surfaces (36) lie approximately on the circumferential surface of a virtual, rectilinear pyramid which is coaxial with the sleeve (33), or of a corresponding cone, the peaks (38) of which face towards the head (4) of the fixing part.

10. Mounting unit according to one of the preceding claims, characterized in that the edge projections (35) are prebent slightly radially inwards.

11. Mounting unit according to one of the preceding claims, characterized in that the edge projections (35) are provided at their radially inner foot region with cross-sectional weakened portions which are effective as predetermined bending notches (39).

12. Mounting unit according to one of the preceding claims, characterized in that the outer edges (40, 41) of the retaining projections (35) are rounded.

13. Mounting unit according to one of the preceding claims, characterized in that the retaining part (33) is supported by an annular flange (42) on the actuating side of the mounting part (1).

14. Mounting unit according to one of the preceding claims, characterized in that the retaining part (43) as insertion sleeve is completely surrounded by the through-hole (10), and in that its edge projections (35), in an inwardly bent captive-fastening position, lie approximately in the plane of the actuating-side entrance into the through-hole (10).

15. Mounting unit according to Claim 14, characterized in that the insertion sleeve (43) is formed by a sheet-metal blank (44, 45) lining the circumference of the hole.

16. Mounting unit according to Claim 15, characterized in that the sheet-metal blank (44, 45) is laid through 360° around the hole axis (11), and in that its edges (46, 47), which run in the direction of the hole axis, abut against one another.

17. Mounting unit according to Claim 15 or 16, characterized in that the abutting edges (46, 47) are interlocked.

18. Mounting unit according to one of the preceding claims, characterized in that the edge projections (35) are essentially knobs which are impressed such that they protrude in the axial direction towards the head (4) of the fixing part (2) and during axial insertion (21) can be plastically deformed into their radial back-gripping position.

19. Mounting unit according to one of the preceding claims, characterized in that the sleeve (43) on its circumferential surface bears wart-like form-fitting projections (49).

20. Mounting unit according to one of the preceding claims, characterized in that the head (4) of the fixing part (2) is concavely hollowed out on its bearing side (50) in the circumferential region of the shank.

21. Method for the production of a captive mounting unit according to one of the preceding claims, characterized in that the fixing part (2) is introduced by its fixing end (30) from the application side into the retaining part (33, 43) and, when there is radially inwardly directed deformation of the retaining projections (35) in their captive-fastening position is pressed in in the axial direction (21) by being subjected to pressure.

## Revendications

1. Unité de montage contenant :
- une partie de montage, par exemple un couvercle de carter (1)
- une partie de fixation, par exemple une vis (2), avec
-- une tête (4) servant à son actionnement de fixation sur le coté actionnement de la partie de montage (1),
-- une tige (5) se raccordant à la tête (4), s'insérant avec du jeu radial dans un trou de passage de la partie de montage, et,
-- une saillie de fixation (6, 16) disposée sur l'extrémité de tige, ressortant de la section transversale de tige et agissant essentiellement sur la périphérie globale de la tige de la partie de fixation (2), par exemple un filet de vis, ainsi qu'
- une partie de maintien (33, 43) en forme de manchon, agissant entre la partie de montage et la partie de fixation (2), à titre de sécurité contre les pertes, qui
-- est fixée sur la partie de montage (1),
-- entoure la tige (5) et, dans sa position d'insertion, la saillie de fixation (6, 16) de la partie de fixation, avec un jeu radial, et
-- pénètre, par une collerette de maintien (14, 35) disposée sur son extrémité (34, 42) située coté tête, orientée radialement vers l'intérieur, faisant office de blocage axial, dans une zone à contre-dépouille (15) agissant entre la tête (4) et la saillie de fixation (6, 16) de la partie de fixation,
caractérisée en ce que
la collerette de maintien (14, 35) est constituée par une pluralité de saillies de maintien (35), préformées, réparties sur la périphérie de l'extrémité coté tête (34, 42) de la partie de maintien (33,43) et espacées les unes des autres à leur position initiale préformée pour donner un passage non entravée à la saillie de fixation (6, 16), et en ce qu'une insertion axiale de la partie de fixation (2) dans sa position de sécurité anti-perte s'effectue essentiellement avec une déformation, agissant en direction axiale, des saillies de maintien (35) qui, dans la position anti-perte, sont pliées vers l'intérieur radialement pour pénétrer dans la zone à contre-dépouille.

2. Unité de montage selon la revendication 1, caractérisée en ce que la saillie de fixation de la partie de fixation (2) est une bride annulaire (16) obtenue par roulage, en plus d'un organe de fixation (6) prévu sur sa tige.

3. Unité de montage selon la revendication 2, caractérisée en ce que,
- en limite au filet de vis situé du coté extrémité est usiné par roulage dans la tige (5) une cannelure annulaire (23), agissant comme sortie de filetage, et
- le matériau de la tige, ayant été refoulé du fait de la formation de la cannelure annulaire (22, 23), constitue une bride annulaire (16) flanquant la cannelure annulaire (22, 23).

4. Unité de montage selon l'une des revendications 1 à 3, caractérisée en ce que la saillie de fixation (6) de la partie de fixation (2) est un bourrelet moleté, formé sur sa tige par roulage en plus en plus d'un organe de fixation, par exemple en plus d'un filet de vis, avec des saillies de moletage réparties régulièrement sur la périphérie de la tige.

5. Unité de montage selon l'une des revendications précédentes caractérisée par des pentes d'introduction (25) agissant dans la direction de l'introduction (21), ménagées sur la saillie de fixation (6, 16).

6. Unité de montage selon l'une des revendications précédentes, caractérisée en ce que la partie de maintien (33) sort, à titre de douille de placement, par une partie de son étendue axiale, sur le coté actionnement de la partie de montage (1).

7. Unité de montage selon l'une des revendications précédentes, caractérisée en ce que la partie de maintien (33) est constituée par enfoncement par une extrémité dans le trou de passage (10) de la partie de montage (1).

8. Unité de montage selon l'une des revendications précédentes, caractérisée en ce que les saillies de maintien (35) sont formées par la tête (4) de la partie de fixation (2), dans la direction de l'axe (11) de la partie de fixation.

9. Unité de montage selon l'une des revendications précédentes, caractérisée en ce que les flans, situés radialement extérieurement, des saillies de bordure (35), dans la position initiale avant leur formage, sont chanfreinés et de manière que les faces obliques (36) soient situées sur l'enveloppe d'une pyramide droite, virtuelle, coaxiale avec le manchon (33), ou bien d'un cône correspondant, dont les pointes (38) sont tournées vers la tête (4) de la partie de fixation.

10. Unité de montage selon l'une des revendications précédentes caractérisée en ce que les saillies de bordure (35) sont légèrement pré-pliées vers l'intérieur radialement.

11. Unité de montage selon l'une des revendications précédentes caractérisée en ce que les saillies de bordure (35) sont dotées, sur leurs zones de pied situées radialement à l'intérieur, d'affaiblissements de la section transversale, agissant à titre d'entailles (39) destinées à la flexion.

12. Unité de montage selon l'une des revendications précédentes caractérisée en ce que les arêtes extérieures (40, 41) des saillies de maintien (45) sont arrondies.

13. Unité de montage selon l'une des revendications précédentes caractérisée en ce que la partie de maintien (33) repose par une bride annulaire (42) sur le coté actionnement de la partie de montage (1).

14. Unité de montage selon l'une des revendications précédentes, caractérisée en ce que la partie de maintien (43) est entourée, à titre de manchon à insérer, complètement par le trou de passage (10), et en ce que ses saillies de bordure (35) sont situées, dans la position de sécurité anti-perte pliée vers l'intérieur, à peu près dans le plan de l'entrée située coté actionnement du trou de passage (10).

15. Unité de montage selon la revendication 14, caractérisée en ce que le manchon à insérer (43) est constitué par un flan en tôle (44, 45) revêtant la périphérie du trou.

16. Unité de montage selon la revendication 15, caractérisée en ce que le flan en tôle (44, 45) est placé sur 360° autour de l'axe (11) du trou et en ce que ses arêtes (46, 47) s'étendant dans la direction de l'axe du trou se jointoient les unes les autres.

17. Unité de montage selon la revendication 15 ou 16, caractérisée en ce que les arêtes de joints (46, 47) sont dotées de dentures se correspondant.

18. Unité de montage selon l'une des revendications précédentes, caractérisée en ce que des saillies de bordure (35) sont des boutons façonnés de façon à faire saillie dans la direction axiale par rapport à la tête (4) de la partie de fixation (2), déformables plastiquement dans leur position de saisie radiale par l'arrière, lors de la course de pénétration axiale (21).

19. Unité de montage selon l'une des revendications précédentes, caractérisée en ce que le manchon (43) porte, sur son enveloppe périphérique, des saillies à ajustement de forme (49) du type pédonne ou bouton.

20. Unité de montage selon l'une des revendications précédentes, caractérisée en ce que la tête (4) de la partie de fixation (2) est dotée d'un creusement concave sur sa face de pose (50), dans la zone périphérique de la tige.

21. Procédé de fabrication d'unité de montage à sécurité anti-perte selon l'une des revendications précédentes, caractérisé en ce que la partie de fixation (2) est introduite par son extrémité de fixation (30), depuis le coté de sollicitation, dans la partie de maintien (33, 43) et est enfoncée avec une sollicitation en pression, en direction axiale (21), avec une déformation, orientée radialement vers l'intérieur, des saillies de maintien (35), dans leur position de sécurité anti-perte.
